# EUROPEAN PATENT APPLICATION

(11) **EP 4 845 197 A1**
(43) Date of publication of application: **25.11.2026**
(21) Application number: 24918215.5
(22) Date of filing: 19.11.2024
(51) Int. Cl.: H04W 24/02

(54) **DATA TRANSMISSION METHODS, APPARATUSES AND STORAGE MEDIUM**

(30) Priority: 19.01.2024 CN 202410083064
(71) Applicant: ZTE Corporation, Shenzhen, Guangdong 518057 (CN)
(72) Inventor: XUE, Yan, Shenzhen, Guangdong 518057 (CN); XIE, Feng, Shenzhen, Guangdong 518057 (CN)
(74) Representative: Ziebig Hengelhaupt Intellectual Property Attorneys Patentanwaltskanzlei PartGmbB
(86) International application number: PCT/CN2024/132972
(87) International publication number: WO 2025/152606

(57) **Abstract**

The embodiments of the present disclosure provide data transmission methods, apparatuses, and a storage medium. A method comprises: receiving unidirectional link data radio bearer (DRB) configuration information from a second network element, the unidirectional link DRB configuration information being used for configuring a DRB dedicated to an unidirectional link; and, on the basis of the unidirectional link DRB configuration information, configuring a DRB dedicated to an unidirectional link.

## Description

The present disclosure claims priority to Chinese Patent Application No. 202410083064.6 filed on January 19, 2024, the entire contents of which are incorporated herein by reference.

### TECHNICAL FIELD

The present disclosure relates to the technical field of communications, and in particular, to a data transmission method, an apparatus, and a storage medium.

### BACKGROUND

With the development of the fifth generation mobile networks (5G), communication services have gradually diversified, and significant differences in service demands have emerged between uplink data transmission and downlink data transmission. For example, a traditional video service has a high demand for bandwidth and throughput in downlink data transmission, but a relatively low demand for uplink data transmission. For another example, a game-related service or a live streaming service has high requirements on uplink throughput and also requires low latency, but may not have high requirements on downlink throughput.

### SUMMARY

In a first aspect, there is provided a data transmission method, applied to a first network element. The method includes:
receiving unidirectional link data radio bearer (DRB) configuration information from a second network element, where the unidirectional link DRB configuration information is used to configure a DRB dedicated to a unidirectional link; and
configuring the DRB dedicated to the unidirectional link based on the unidirectional link DRB configuration information.

In a second aspect, there is provided a data transmission method, applied to a second network element. The method includes:
sending unidirectional link DRB configuration information to a first network element, where the unidirectional link DRB configuration information is used to configure a DRB dedicated to a unidirectional link.

In a third aspect, there is provided a communication apparatus, applied to a first network element. The apparatus includes:
a receiving unit, configured to receive unidirectional link DRB configuration information from a second network element, where the unidirectional link DRB configuration information is used to configure a DRB dedicated to a unidirectional link; and
a processing unit, configured to configure the DRB dedicated to the unidirectional link based on the unidirectional link DRB configuration information.

In a fourth aspect, there is provided a communication apparatus, applied to a second network element. The apparatus includes:
a sending unit, configured to send unidirectional link DRB configuration information to a first network element, where the unidirectional link DRB configuration information is used to configure a DRB dedicated to a unidirectional link.

In a fifth aspect, there is provided a communication apparatus, including: a processor and a memory, where the memory and the processor are coupled; the memory is configured to store instructions executable by the processor; and the processor, upon executing the instructions, enables the communication apparatus to implement the method according to any one of the first aspect or the second aspect.

In a sixth aspect, there is provided a computer-readable storage medium, where the computer-readable storage medium stores computer instructions, and when the computer instructions are run on a computer, the computer is enabled to execute the method according to any one of the first aspect or the second aspect.

In a seventh aspect, there is provided a computer program product including computer instructions, and when the computer instructions are run on a computer, the computer is enabled to execute the method according to any one of the first aspect or the second aspect.

### BRIEF DESCRIPTION OF THE DRAWINGS

The drawings are used to provide a further understanding of the technical solutions of the present disclosure, and form a part of the specification. The drawings are used to explain the technical solutions of the present disclosure together with the embodiments of the present disclosure , but do not constitute a limitation on the technical solutions of the present disclosure.
FIG. 1 is a schematic structural diagram of a communication system provided by embodiments of the present disclosure.
FIG. 2 is a schematic flowchart of a data transmission method provided by the embodiments of the present disclosure.
FIG. 3 is a schematic diagram of an association relationship provided by the embodiments of the present disclosure.
FIG. 4 is a schematic diagram of another association relationship provided by the embodiments of the present disclosure.
FIG. 5 is a schematic diagram of yet another association relationship provided by the embodiments of the present disclosure.
FIG. 6 is a schematic diagram of yet another association relationship provided by the embodiments of the present disclosure.
FIG. 7 is a schematic diagram of yet another association relationship provided by the embodiments of the present disclosure.
FIG. 8 is a schematic diagram of yet another association relationship provided by the embodiments of the present disclosure.
FIG. 9 is a schematic diagram of data transmission using uplink and downlink DRBs in a dual connectivity (DC) scenario provided by the embodiments of the present disclosure.
FIG. 10 is a schematic diagram of data transmission using uplink and downlink DRBs in a mobility scenario provided by the embodiments of the present disclosure.
FIG. 11 is a schematic flowchart of another data transmission method provided by the embodiments of the present disclosure.
FIG. 12 is a composition schematic diagram of a communication apparatus provided by the embodiments of the present disclosure.
FIG. 13 is a composition schematic diagram of another communication apparatus provided by the embodiments of the present disclosure.
FIG. 14 is a schematic structural diagram of a communication apparatus provided by the embodiments of the present disclosure.

### DETAILED DESCRIPTION

The technical solutions in the embodiments of the present disclosure will be clearly and completely described below with reference to the drawings in the embodiments of the present disclosure. Obviously, the described embodiments are only a part of the embodiments of the present disclosure, rather than all of the embodiments. Based on the embodiments in the present disclosure, all other embodiments obtained by those of ordinary skill in the art without making creative efforts belong to the protection scope of the present disclosure.

Unless otherwise required by the context, throughout the description and the claims, the term "comprise" and other forms thereof such as the third-person singular form "comprises" and the present participle form "comprising" are interpreted as an open and inclusive meaning, i.e., "including, but not limited to". In the description of the specification, the terms "one embodiment", "some embodiments", "exemplary embodiments", "example", "specific example" or "some examples" are intended to indicate that specific features, structures, materials or characteristics related to the embodiment or example are included in at least one embodiment or example of the present disclosure. The schematic representations of the above terms do not necessarily refer to the same embodiment or example. Furthermore, the described specific features, structures, materials or characteristics may be included in any one or more embodiments or examples in any appropriate manner.

The terms "first", "second" and the like are used for descriptive purposes only and shall not be understood as indicating or implying relative importance or implicitly indicating the number of the indicated technical features. Thus, features defined with "first", "second" and the like may explicitly or implicitly include one or more of such features. In the description of the present disclosure, unless otherwise stated, "plurality of/multiple" means two or more.

In the embodiments of the present disclosure, words such as "exemplarily" or "for example" are used to indicate an example, an illustration or an explanation. Any embodiment or design described as "exemplarily" or "for example" in the embodiments of the present disclosure should not be construed as being more preferred or more advantageous than other embodiments or designs. Specifically, the usage of words such as "exemplarily" or "for example" is intended to present the related concepts in a concrete manner.

In addition, the usage of "based on" means openness and inclusiveness, because a process, step, calculation or other action "based on" one or more stated conditions or values may be based on additional conditions or beyond the stated values in practice.

A radio bearer (RB) is a general term for the allocation of configurations and protocol entities of different layers by a base station for user equipment (UE), and includes a series of resources allocated by a service data adaptation protocol (SDAP) protocol entity, a packet data convergence protocol (PDCP) protocol entity, a radio link control (RLC) protocol entity, a medium access control (MAC) protocol entity and a physical layer (PHY). In a 5G new radio (NR) wireless network, a DRB is used to carry a user data packet, and a signaling radio bearer (SRB) is used to carry a user signaling message. For data transmission, multiple DRBs may be simultaneously established between a UE and a base station node, and each DRB provides the same forwarding processing for data packets. There are multiple quality of service flows (QoS flows) under one protocol data unit session (PDU session), and one or more QoS flows are mapped onto one DRB in the SDAP layer. Data of different DRBs is multiplexed in the MAC layer after being processed by the PDCP layer and the RLC layer. In the MAC layer, a MAC entity carries out transport block (TB) transmission on multiple HARQ processes through a hybrid automatic repeat request (HARQ) entity.

In 5G, parameter configurations of uplink data transmission and downlink data transmission for protocol entities in each layer are implemented by a configuration of a bearer through the RRC layer. In a configuration of one DRB, parameter configurations for uplink and downlink are simultaneously included. Since data under the same DRB uses the same forwarding processing, the usage of the same DRB for uplink and downlink also causes the same forwarding processing for uplink data and downlink data. In a dual connectivity scenario, whether it is uplink data transmission or downlink data transmission, the corresponding master node (MN), secondary node (SN), master cell group (MCG) and secondary cell group (SCG) are the same, and accordingly, the MCG bearer and the SCG bearer cannot distinguish uplink data transmission from downlink data transmission. In addition, when multiple carriers are used for data transmission, uplink and downlink data transmissions use the same primary carrier component (PCC) and each carrier corresponds to one HARQ entity.

With the gradual diversification of communication services, significant differences in service demands have emerged between uplink data transmission and downlink data transmission. For example, a traditional video service has a high demand for bandwidth and throughput in downlink data transmission, but a relatively low demand for uplink data transmission. For another example, a game-related service or a live streaming service has high requirements on uplink throughput and also requires low latency. However, in current 5G, the configurations of DRBs, HARQ entities and resources are highly coupled, making the correlation between uplink data transmission and downlink data transmission very strong. That is, a tightly coupled uplink and downlink design exists in the related art, where regardless of uplink data transmission or downlink data transmission, the same HARQ entity, DRB, serving cell and physical resources are configured in the base station and the UE. When there is a large difference between uplink and downlink services, it is difficult for the same configuration to adapt to both uplink data transmission and downlink data transmission simultaneously, resulting in the problem of high transmission complexity.

Based on this, the embodiments of the present disclosure provide a data transmission method, an apparatus, and a storage medium, where a first network element, based on unidirectional link DRB configuration information from a second network element, configures a DRB dedicated to a unidirectional link. In this way, each unidirectional link has a dedicated DRB, so that data transmission can be performed based on the DRB dedicated to each unidirectional link, thereby reducing the complexity of data transmission.

The solutions of the embodiments of the present disclosure will be described below with reference to the drawings.

The technical solutions provided by the embodiments of the present disclosure may be applied to 5G or the sixth-generation mobile communication networks (6G), which is not limited in the embodiments of the present disclosure thereto. The technical solutions provided by the embodiments of the present disclosure may be applied to various mobile communication network scenarios, including traditional cellular scenarios, sidelink (SL) communication scenarios, integrated access backhaul (IAB) scenarios, etc., which is not limited in the embodiments of the present disclosure thereto.

In the embodiments of the present disclosure, the first network element includes but is not limited to at least one of: an RAN (radio access network), a UE, a CU, a DU, a relay node, an IAB node, an on board unit (OBU), and a road side unit (RSU). The second network element includes but is not limited to at least one of: an RAN, a UE, a CU, a DU, a relay node, an IAB node, an OBU, and an RSU.

In the embodiments of the present disclosure, a network element may include one to multiple network nodes, one to multiple network functions, one to multiple network layers, one to multiple network devices, and/or one to multiple network entities. For example, the network element may be an RAN node, an RRC (Radio Resource Control) layer of the RAN, the MAC layer of the RAN, a MAC entity of the RAN, a central unit (CU), a distributed unit (DU), a UE, or an IAB (Integrated Access and Backhaul) node. The RAN node may be a base station device, such as a 4G base station eNodeB, a 5G base station gNodeB, or a next-generation new type of base station. In the embodiments of the present disclosure, a DRB may be at least one of: a communication-related radio bearer, a sensing-related radio bearer, an AI (Artificial Intelligence)-related radio bearer, a data service-related radio bearer, a computation-related radio bearer, and a security/trust-related radio bearer.

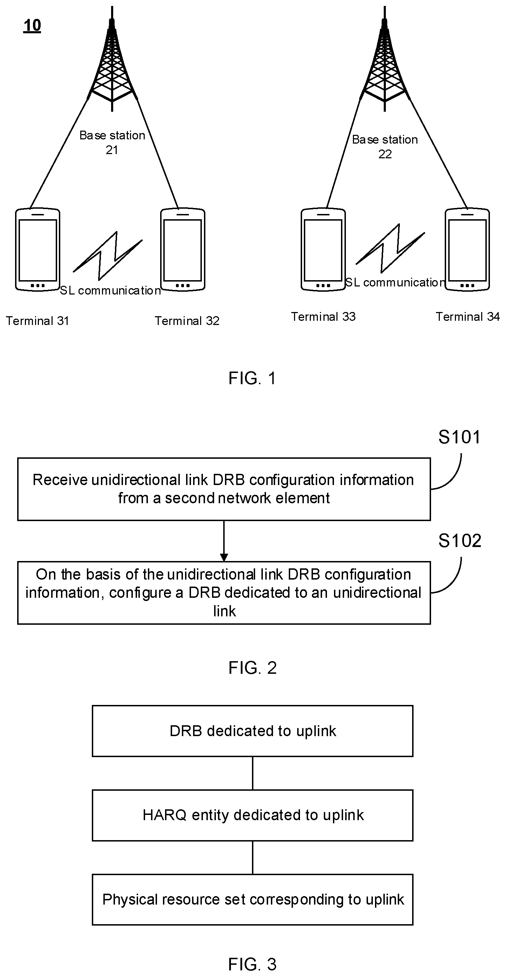

FIG. 1 is a schematic structural diagram of a communication system provided by the embodiments of the present disclosure. As shown in FIG. 1, the communication system 10 includes multiple base stations (e.g., base station 21 and base station 22) and multiple terminals (e.g., terminal 31, terminal 32, terminal 33 and terminal 34). The multiple base stations and the multiple terminals may be connected via a wired network or a wireless network. The wired network or wireless network may include routers, switches, or other devices that facilitate communication between the multiple base stations and the multiple terminals, which is not limited in the embodiments of the present disclosure thereto.

In some embodiments, the base station is used to provide wireless access services to the multiple terminals. For example, one base station provides a service coverage area (also called a cell). A terminal entering the area may communicate with the base station via wireless signals, so as to receive the wireless access service provided by the base station. There may be overlapping area between the service coverage areas of base stations, and a terminal in the overlapping area may receive wireless signals from multiple base stations.

In some embodiments, each base station among the multiple base stations may be connected to multiple terminals, for example, base station 21 is connected to terminal 31 and terminal 32. Terminal 31 and terminal 32 may be located in the same cell, or may be located in different cells. That is, one base station may provide network services to terminals in one cell, or may simultaneously provide network services to terminals in multiple cells.

In some embodiments, each base station (e.g., base station 21) among the multiple base stations may be any node among an evolved NodeB (eNB), a next generation NodeB (gNB), a transmission receive point (TRP), a transmission point (TP), an access point (AP), and some other access nodes. According to the size of the provided service coverage area, base stations may be further classified into macro base stations for providing macro cells, pico base stations for providing pico cells, and femto base stations for providing femto cells. With the continuous evolution of wireless communication technologies, future base stations may also adopt other names.

In some embodiments, each terminal (e.g., terminal 31) among the multiple terminals may be a device with a wireless transceiving function, such as a mobile phone, a tablet computer, a wearable device, a vehicular device, an augmented reality (AR)/virtual reality (VR) device, a notebook computer, an ultra-mobile personal computer (UMPC), a netbook, a personal digital assistant (PDA), etc. The embodiments of the present disclosure do not limit the specific type of the terminal.

In some embodiments, communication may be performed between terminals, for example, terminal 31 and terminal 32 in FIG. 1 perform SL communication, and terminal 33 and terminal 34 perform SL communication. The communication between terminals refers to communication directly performed between two terminals. Taking device to device (D2D) communication as an example, the terminals performing D2D communication may be called D2D terminals, and a link between two terminals performing D2D communication may be called a pair of D2D links, where the two terminals in a pair of D2D links may serve as a receiving end and a transmitting end for each other. In a single transmission, one terminal may serve as the transmitting end, and the other terminal may serve as the receiving end. If both terminals support a simultaneous transceiving function, each D2D terminal may serve as both the transmitting end and the receiving end simultaneously.

It should be understood that FIG. 1 is an exemplary structural diagram, and a number of devices included in the communication system shown in FIG. 1 is not limited, for example, a number of base stations is not limited and a number of terminals is not limited. Moreover, in addition to the devices shown in FIG. 1, the communication system shown in FIG. 1 may also include other devices, which is not limited thereto.

Next, as shown in FIG. 2, the embodiments of the present disclosure provides a data transmission method, which is applied to a first network element. The first network element may be any terminal among the terminals shown in FIG. 1, e.g., terminal 31. The method may at least include S101 to S102:

In S101: unidirectional link DRB configuration information is received from a second network element.

In some embodiments, in order to reduce the complexity of data transmission, after the unidirectional link DRB configuration information is configured, the second network element may send the unidirectional link DRB configuration information to the first network element. Correspondingly, the first network element receives the unidirectional link DRB configuration information from the second network element. The unidirectional link DRB configuration information is used to configure a DRB dedicated to a unidirectional link. In a scenario where uplink and downlink are distinguished, the second network element may be the above base station 21 shown in FIG. 1. In a scenario where uplink and downlink are not distinguished, such as D2D, vehicle to X communication (V2X), IAB, SL, and intelligent interaction, taking the first network element being the above terminal 31 shown in FIG. 1 as an example, the second network element may be the above terminal 32 connected to terminal 31 shown in FIG. 1, or may be the above base station 21 shown in FIG. 1. The embodiments of the present disclosure do not limit the specific implementation of the second network element. Furthermore, in the above scenarios where uplink and downlink are not distinguished, the first network element may also be another device, which serves as a transmitting end or a receiving end for data transmission. For example, the first network element may be an IAB node, which serves as a transmitting end or a receiving end for data transmission, and for another example, the first network element may be an intelligent robot, which serves as a transmitting end or a receiving end for data transmission.

In some embodiments, the unidirectional link includes any one of: uplink, downlink, transmission link, or reception link. Taking the first network element being a terminal and the second network element being a base station as an example, the uplink refers to a data transmission path for the terminal to send data to the base station, and the downlink refers to a data transmission path for the base station to send data to the terminal. Taking the first network element being a first terminal and the second network element being a second terminal as an example, the transmission link refers to a data transmission path for the first terminal to send data to the second terminal, and the reception link refers to a data transmission path for the first terminal to receive data sent by the second terminal.

In some embodiments, the DRB dedicated to the unidirectional link includes any one of: a DRB dedicated to uplink, a DRB dedicated to downlink, a DRB dedicated to transmission link, or a DRB dedicated to reception link. The transmission link may also have other names, e.g., a sending link, which is not limited by the embodiments of the present disclosure thereto.

In some embodiments, the unidirectional link DRB configuration information only includes information related to the unidirectional link. Taking the unidirectional link being uplink as an example, the uplink DRB configuration information may only include information related to uplink, and does not include information related to downlink. Taking the unidirectional link being downlink as an example, the downlink DRB configuration information may only include information related to downlink, and does not include information related to uplink. In this way, the DRB configuration of the uplink is decoupled from the DRB configuration of the downlink, so that the first network element can perform independent uplink and downlink data transmissions respectively according to the differences between an uplink service and a downlink service, thus reducing the complexity of data transmission.

In some embodiments, the unidirectional link DRB configuration information includes at least one of: an identifier of a DRB dedicated to the unidirectional link, an identifier of a HARQ entity dedicated to the unidirectional link, a physical resource set corresponding to the unidirectional link, SDAP configuration information of the unidirectional link, PDCP configuration information of the unidirectional link, RLC configuration information of the unidirectional link, MAC configuration information of the unidirectional link, a cell identifier of the unidirectional link, a primary cell identifier of the unidirectional link, or a cell group identifier of the unidirectional link.

For example, taking the unidirectional link being uplink (UL) as an example, the uplink DRB configuration information includes at least one of: an identifier of a DRB dedicated to uplink, an identifier of a HARQ entity dedicated to uplink, a physical resource set corresponding to uplink, SDAP configuration information of uplink, PDCP configuration information of uplink, RLC configuration information of uplink, MAC configuration information of uplink, a cell identifier of uplink, a primary cell identifier of uplink, or a cell group identifier of uplink. In some embodiments, only establishment, modification or release of the DRB dedicated to uplink is performed in the uplink DRB configuration information.

For another example, taking the unidirectional link being downlink (DL) as an example, the downlink DRB configuration information includes at least one of: an identifier of a DRB dedicated to downlink, an identifier of a HARQ entity dedicated to downlink, a physical resource set corresponding to downlink, SDAP configuration information of downlink, PDCP configuration information of downlink, RLC configuration information of downlink, MAC configuration information of downlink, a cell identifier of downlink, a primary cell identifier of downlink, or a cell group identifier of downlink. In some embodiments, only establishment, modification or release of the DRB dedicated to downlink is performed in the downlink DRB configuration information.

For another example, taking the unidirectional link being a transmission link as an example, the transmission link DRB configuration information (e.g., txdrb-ToAddModList) includes at least one of: an identifier of a DRB dedicated to the transmission link (e.g., txdrb-Identity), an identifier of a HARQ entity dedicated to the transmission link, a physical resource set corresponding to the transmission link, SDAP configuration information of the transmission link (e.g., sdap-Config), PDCP configuration information of the transmission link (e.g., pdcp-Config), RLC configuration information of the transmission link, MAC configuration information of the transmission link, a cell identifier of the transmission link, a primary cell identifier of the transmission link, or a cell group identifier of the transmission link. In some embodiments, only establishment, modification or release of the DRB dedicated to the transmission link is performed in the transmission link DRB configuration information.

For another example, taking the unidirectional link being a reception link as an example, the reception link DRB configuration information (e.g., rxdrb-ToAddModList) includes at least one of: an identifier of a DRB dedicated to the reception link (e.g., dldrb-Identity), an identifier of a HARQ entity dedicated to the reception link, a physical resource set corresponding to the reception link, SDAP configuration information of the reception link (e.g., dlsdap-Config), PDCP configuration information of the reception link (e.g., dlpdcp-Config), RLC configuration information of the reception link, MAC configuration information of the reception link, a cell identifier of the reception link, a primary cell identifier of the reception link, or a cell group identifier of the reception link. In some embodiments, only establishment, modification or release of the DRB dedicated to the reception link is performed in the reception link DRB configuration information.

In some embodiments, by independently configuring an uplink DRB, uplink has a dedicated uplink primary cell or cell group for data transmission, and by independently configuring a downlink DRB, downlink has a dedicated downlink primary cell or cell group for data transmission. Through the independent configuration of uplink and downlink DRBs, uplink and downlink have different primary cells or cell groups.

In some embodiments, the above physical resource set includes at least one of: an identifier of a bandwidth part (BWP), a carrier identifier, or a cell identifier.

In some embodiments, the above BWP is an active BWP. A cell refers to at least one of: a base station, a distributed unit (DU), or a transmission receive point (TRP).

In some embodiments, the above physical resources included in the physical resource set include at least one of: BWP resources, carrier resources, frequency band resources, or cell resources. The frequency band resource is a spectral bandwidth resource related to an absolute frequency. For example, the 4.9 GHz frequency band corresponds to a 100 MHz bandwidth of 4800 MHz-4900 MHz. One physical resource set may include multiple different BWP resources, multiple different carrier resources, multiple different frequency band resources, and multiple different cell resources.

In some embodiments, the DRB dedicated to the unidirectional link is associated with the HARQ entity dedicated to the unidirectional link. For example, taking the unidirectional link being uplink as an example, when the uplink DRB configuration information includes an identifier of a DRB dedicated to uplink (such as an uplink DRB identifier) and an identifier of a HARQ entity dedicated to uplink (such as an uplink HARQ entity identifier), the DRB dedicated to uplink is associated with the HARQ entity dedicated to uplink through the identifier of the DRB dedicated to uplink and the identifier of the HARQ entity dedicated to uplink. For another example, taking the unidirectional link being downlink as an example, when the downlink DRB configuration information includes an identifier of a DRB dedicated to downlink (such as a downlink DRB identifier) and an identifier of a HARQ entity dedicated to downlink (such as a downlink HARQ entity identifier), the DRB dedicated to downlink is associated with the HARQ entity dedicated to downlink through the identifier of the DRB dedicated to downlink and the identifier of the HARQ entity dedicated to downlink.

In some embodiments, the HARQ entity dedicated to the unidirectional link is associated with the physical resource set corresponding to the unidirectional link. The physical resource set corresponding to the unidirectional link may be a physical resource set dedicated to the unidirectional link, or may be the same physical resource set as that of another unidirectional link. For example, uplink physical resources and downlink physical resources may be completely different, or may be partially the same or completely the same.

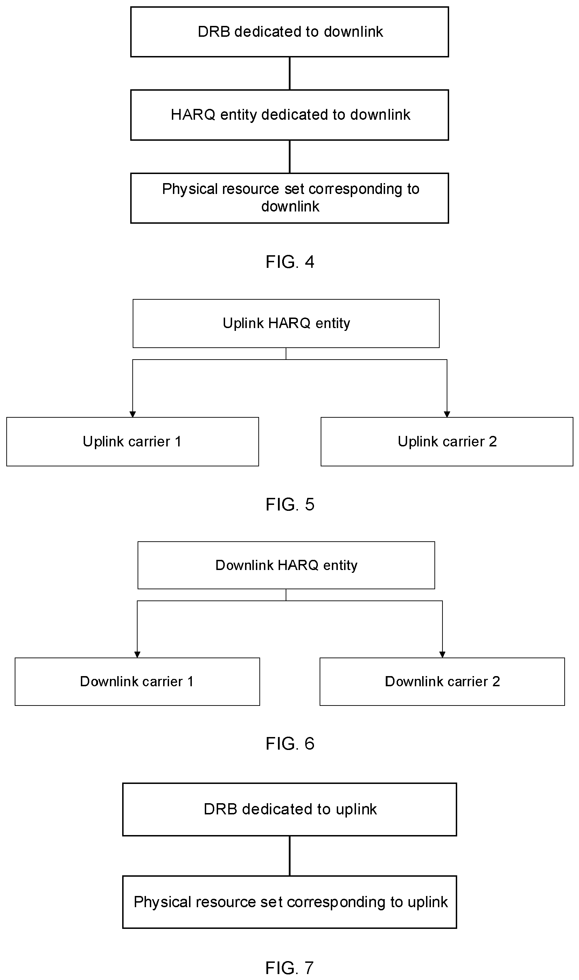

In some embodiments, there is an association relationship among the DRB dedicated to the unidirectional link, the HARQ entity dedicated to the unidirectional link, and the physical resource set corresponding to the unidirectional link. For example, taking the unidirectional link being uplink as an example, when the uplink DRB configuration information includes an identifier of a DRB dedicated to uplink, an identifier of a HARQ entity dedicated to uplink and a physical resource set corresponding to uplink, illustratively, as shown in FIG. 3, which is a schematic diagram of an association relationship provided by the embodiments of the present disclosure, referring to FIG. 3, data of the DRB dedicated to uplink may use the HARQ entity dedicated to uplink and the physical resources in the physical resource set corresponding to uplink to perform uplink data transmission. For another example, taking the unidirectional link being downlink as an example, when the downlink DRB configuration information includes an identifier of a DRB dedicated to downlink, an identifier of a HARQ entity dedicated to downlink and a physical resource set corresponding to downlink, illustratively, as shown in FIG. 4, which is a schematic diagram of another association relationship provided by the embodiments of the present disclosure, referring to FIG. 4, data of the DRB dedicated to downlink may use the HARQ entity dedicated to downlink and the physical resources in the physical resource set corresponding to downlink to perform downlink data transmission.

In some embodiments, when the unidirectional link DRB configuration information includes the identifier of the HARQ entity dedicated to the unidirectional link and the physical resource set corresponding to the unidirectional link, and the physical resource set includes a carrier identifier, it indicates that the HARQ entity dedicated to the unidirectional link may use carrier resources corresponding to the carrier identifier for data transmission.

For example, taking the unidirectional link being uplink as an example, when the uplink DRB configuration information includes an identifier of a HARQ entity dedicated to uplink and two uplink carrier identifiers (e.g., one uplink carrier identifier under 800 MHz and one uplink carrier identifier under 3.5 GHz), it indicates that the HARQ entity dedicated to uplink uses the two uplink carrier resources corresponding to the two uplink carrier identifiers to perform uplink data transmission. In this way, using low-frequency uplink carrier resources for uplink data transmission by the HARQ entity dedicated to uplink can improve the reliability of uplink data transmission, and using high-frequency uplink carrier resources for uplink data transmission by the HARQ entity dedicated to uplink can improve the throughput of uplink data transmission. Furthermore, uplink transmission data that is erroneously transmitted on the high-frequency uplink carrier resource may be retransmitted on the low-frequency uplink transmission resource. Illustratively, as shown in FIG. 5, FIG. 5 is a schematic diagram of another association relationship provided by the embodiments of the present disclosure, referring to FIG. 5, assuming that the uplink DRB configuration information includes an identifier of the HARQ entity dedicated to uplink (i.e., the identifier refers to an uplink HARQ entity), and the two uplink carrier identifiers are uplink carrier 1 and uplink carrier 2 respectively, then the uplink HARQ entity may perform uplink data transmission on uplink carrier 1 and uplink carrier 2.

For another example, taking the unidirectional link being downlink as an example, when the downlink DRB configuration information includes an identifier of a HARQ entity dedicated to downlink and two downlink carrier identifiers (e.g., one downlink carrier identifier under 3.5 GHz and one downlink carrier identifier under 6 GHz), it indicates that the HARQ entity dedicated to downlink uses the two downlink carrier resources corresponding to the two downlink carrier identifiers to perform downlink data transmission. Illustratively, as shown in FIG. 6, FIG. 6 is a schematic diagram of another association relationship provided by the embodiments of the present disclosure, referring to FIG. 6, assuming that the downlink DRB configuration information includes an identifier of the HARQ entity dedicated to downlink (i.e., the identifier refers to an downlink HARQ entity), and the two downlink carrier identifiers are downlink carrier 1 and downlink carrier 2 respectively, then the downlink HARQ entity may perform downlink data transmission on downlink carrier 1 and downlink carrier 2.

In some embodiments, uplink and downlink decouple uplink and downlink data transmissions on carriers through respective DRB configurations. In some embodiments, uplink data and downlink data may be transmitted using carriers of different frequency bands.

It should be understood that the transmit power of a terminal is usually lower than the transmit power of a base station, and the terminal uses low-frequency carrier resources while the base station uses high-frequency carrier resources to ensure the performance of uplink and downlink data transmissions. Thus, by configuring different dedicated HARQ entities and carrier resources for uplink and downlink respectively, uplink and downlink decoupling is achieved, thereby ensuring the effect of uplink and downlink differentiation.

In some embodiments, the DRB dedicated to the unidirectional link is associated with the physical resource set corresponding to the unidirectional link. When the unidirectional link DRB configuration information includes the identifier of the DRB dedicated to the unidirectional link and the physical resource set corresponding to the unidirectional link, it indicates that the data of the DRB dedicated to the unidirectional link may use the physical resource set corresponding to the unidirectional link for data transmission.

For example, taking the unidirectional link being uplink as an example, when the uplink DRB configuration information includes an identifier of a DRB dedicated to uplink and a physical resource set corresponding to uplink, it indicates that the DRB dedicated to uplink may use the physical resource set corresponding to uplink for data transmission. Illustratively, as shown in FIG. 7, FIG. 7 is a schematic diagram of another association relationship provided by the embodiments of the present disclosure, referring to FIG. 7, the DRB dedicated to uplink corresponds to the physical resource set corresponding to uplink.

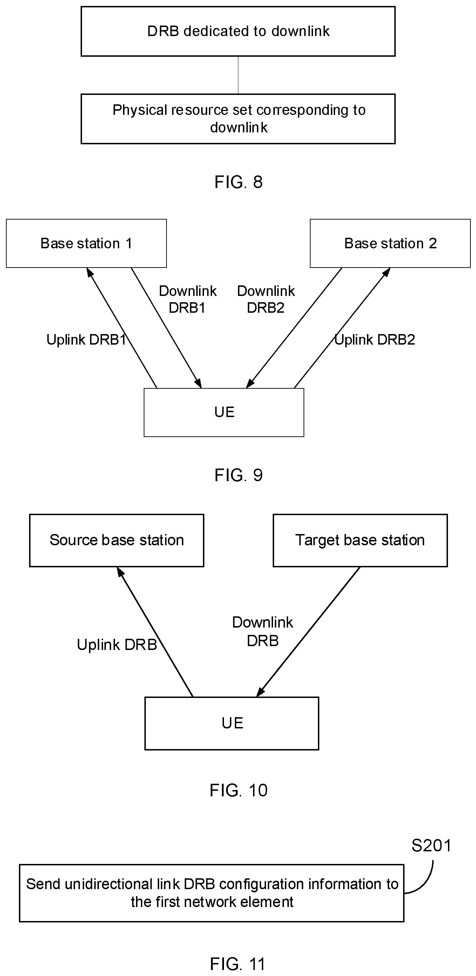

For another example, taking the unidirectional link being downlink as an example, when the downlink DRB configuration information includes an identifier of a DRB dedicated to downlink and a physical resource set corresponding to downlink, it indicates that the DRB dedicated to downlink may use the physical resource set corresponding to downlink for data transmission. Taking a case where the physical resource set includes a carrier identifier as an example, the DRB dedicated to uplink may use uplink carrier resources dedicated to uplink for data transmission, and the DRB dedicated to downlink may use downlink carrier resources dedicated to downlink for data transmission. Illustratively, as shown in FIG. 8, FIG. 8 is a schematic diagram of another association relationship provided by the embodiments of the present disclosure, referring to FIG. 8, the DRB dedicated to downlink corresponds to the physical resource set corresponding to downlink.

As a possible example, taking the unidirectional link being downlink as an example, when the downlink DRB configuration information includes an identifier of a DRB dedicated to downlink and two BWP identifiers, it indicates that the data of the DRB dedicated to downlink may use the two BWPs corresponding to the two BWP identifiers for downlink data transmission. These two BWPs may be from different frequency bands. The two BWPs may be active BWPs, that is, the data of the DRB dedicated to downlink may use the two active BWPs for downlink data transmission. In some embodiments, receiving the unidirectional link DRB configuration information from the second network element may be receiving the unidirectional link DRB configuration information from the second network element through a first control message. That is, a first control message sent from the second network element is received, where the first control message includes the unidirectional link DRB configuration information. In some embodiments, the first control message includes at least one of: a radio resource control (RRC) message, or a DRB configuration message. The RRC message is a control message sent from the base station to the UE, and the RRC message includes multiple information elements (IEs) related to bearers. The first control information may also have other names, e.g., first control signaling.

In some embodiments, the first control message may include one piece of unidirectional link DRB configuration information, or may include multiple pieces of unidirectional link DRB configuration information. Taking a case where the first control message includes the uplink DRB configuration information and the downlink DRB configuration information as an example, when the uplink DRB configuration information includes an identifier of a DRB dedicated to uplink and an uplink cell identifier (e.g., base station 1), and the downlink DRB configuration information includes an identifier of a DRB dedicated to downlink and a downlink cell identifier (e.g., base station 2), it indicates that the uplink of the first network element is connected to base station 1 and performs uplink data transmission with base station 1 through the DRB dedicated to uplink, and the downlink of the first network element is connected to base station 2 and performs downlink data transmission with base station 2 through the DRB dedicated to downlink.

As an example, the data transmission method provided by the embodiments of the present disclosure is applicable to a dual connectivity (DC) scenario. In some embodiments, in the DC scenario, the uplink and the downlink may be connected to the same cell or different cells. For example, the first control message may also be used to indicate an uplink primary cell corresponding to the DRB dedicated to uplink and a downlink primary cell corresponding to the DRB dedicated to downlink, and the uplink primary cell and the downlink primary cell may be the same or different. For example, the first control message includes the identifier of the DRB dedicated to uplink, the uplink primary cell identifier, the identifier of the DRB dedicated to downlink, and the downlink primary cell identifier. For another example, the first control message also includes uplink master cell group (MCG) bearer information and downlink MCG bearer information, and the uplink MCG bearer information and the downlink MCG bearer information may be the same or different. In the DC scenario, it is assumed that the UE is simultaneously connected to base station 1 and base station 2, and performs data transmission with the two base stations simultaneously. If the uplink and downlink transmissions of each base station in dual connectivity both use the same DRB, it will affect the downlink transmission between the UE and base station 1 supposing that the connection between the UE and base station 1 is interrupted in uplink. Through the technical solution of the present disclosure, as shown in FIG. 9, FIG. 9 is a schematic diagram of using uplink and downlink DRBs for data transmission in a DC scenario provided by the embodiments of the present disclosure. Referring to FIG. 9, the UE uses an uplink DRB (which may use a low frequency to send uplink data of the UE) with base station 1, and the UE uses a downlink DRB (which may use a high frequency to send downlink data of the UE) with base station 1. Through the separation/decoupling of uplink and downlink DRBs, the data transmission between the UE and base station 1 can support the usage of a low frequency for uplink to improve data transmission reliability, and can also support the usage of a high frequency for downlink to improve throughput. The bidirectional link between the UE and base station 2 may also use the manner of an uplink DRB and a downlink DRB. In this way, the downlink data transmission of the UE may use the downlink DRB of base station 1 and the downlink DRB of base station 2, and the uplink data transmission of the UE may use the uplink DRB of base station 1 and the uplink DRB of base station 2. The uplink DRB1, the downlink DRB1, the uplink DRB2, and the downlink DRB2 may be DRBs independently configured through different unidirectional link DRB configuration information respectively.

As another example, the data transmission method provided by the embodiments of the present disclosure is also applicable to a mobility scenario. For example, as shown in FIG. 10, FIG. 10 is a schematic diagram of using uplink and downlink DRBs for data transmission in a mobility scenario provided by the embodiments of the present disclosure, referring to FIG. 10, during the movement of the UE, the downlink DRB data transmission between the UE and the source base station may be migrated to the target base station. Meanwhile, the uplink DRB between the UE and the source base station remains unchanged. For another example, under one centralized unit (CU), there are two distributed units (DUs). The uplink uses DU1 to connect with the UE and uses the uplink DRB for uplink transmission, and the downlink data is migrated to DU2, and the downlink transmission is performed between DU2 and the UE using the downlink DRB. In some embodiments, the migration of the downlink DRB may be performed through the first control message.

As another example, the data transmission method provided by the embodiments of the present disclosure is also applicable to scenarios where uplink and downlink are not distinguished, such as D2D, V2X, IAB and other scenarios. For the above scenarios where uplink and downlink are not distinguished, in the data transmission method provided by the embodiments of the present disclosure, a DRB dedicated to a unidirectional link is configured for the unidirectional link, for example, a DRB dedicated to a transmission link is configured for the transmission link, and a DRB dedicated to a reception link is configured for the reception link, so that the first network element can perform independent transmission of service data in different link directions.

Illustratively, taking the first network element serving as a transmitting end and a receiving end as an example, the first control message may include two types: transmission link DRB configuration information used by the first network element as a transmitting end and reception link DRB configuration information used by the first network element as a receiving end.

In S102: he DRB dedicated to the unidirectional link is configured based on the unidirectional link DRB configuration information.

As an example, configuring the DRB dedicated to the unidirectional link includes at least one of:
establishing the DRB dedicated to the unidirectional link;
modifying the DRB dedicated to the unidirectional link; or
releasing the DRB dedicated to the unidirectional link. Herein, the release of a DRB may also be characterized by other names, such as deletion, removal, etc., which is not limited by the embodiments of the present disclosure thereto.

It should be noted that in the related prior art, the bidirectional link of uplink and downlink, or the bidirectional link of transmission link and reception link, uses the same DRB configuration, without distinguishing uplink and downlink, or the transmitting end and the receiving end. The coupling of the DRB configuration is strong, and the DRB cannot be independently configured for uplink and downlink or for the transmitting end and the receiving end, for example, the DRB cannot be independently established, modified or released. For example, in the RRC protocol of 5G TS38.331, the information element radio bearer configuration (IE RadioBearerConfig) includes information on DRB establishment, modification and release as follows:

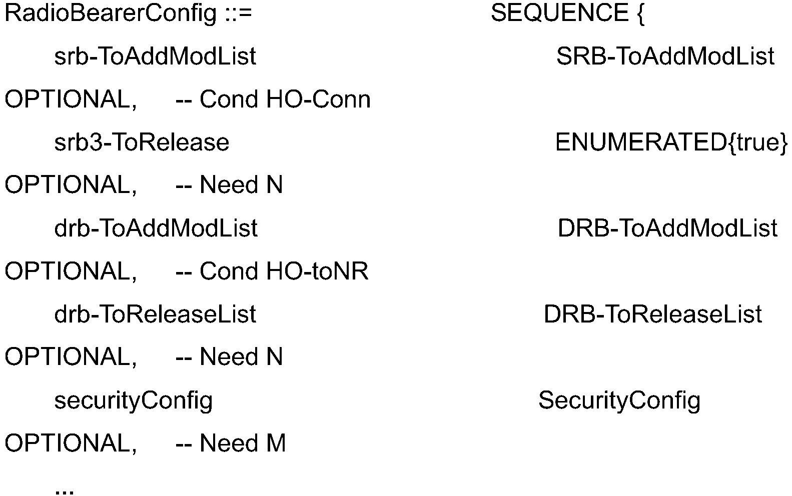

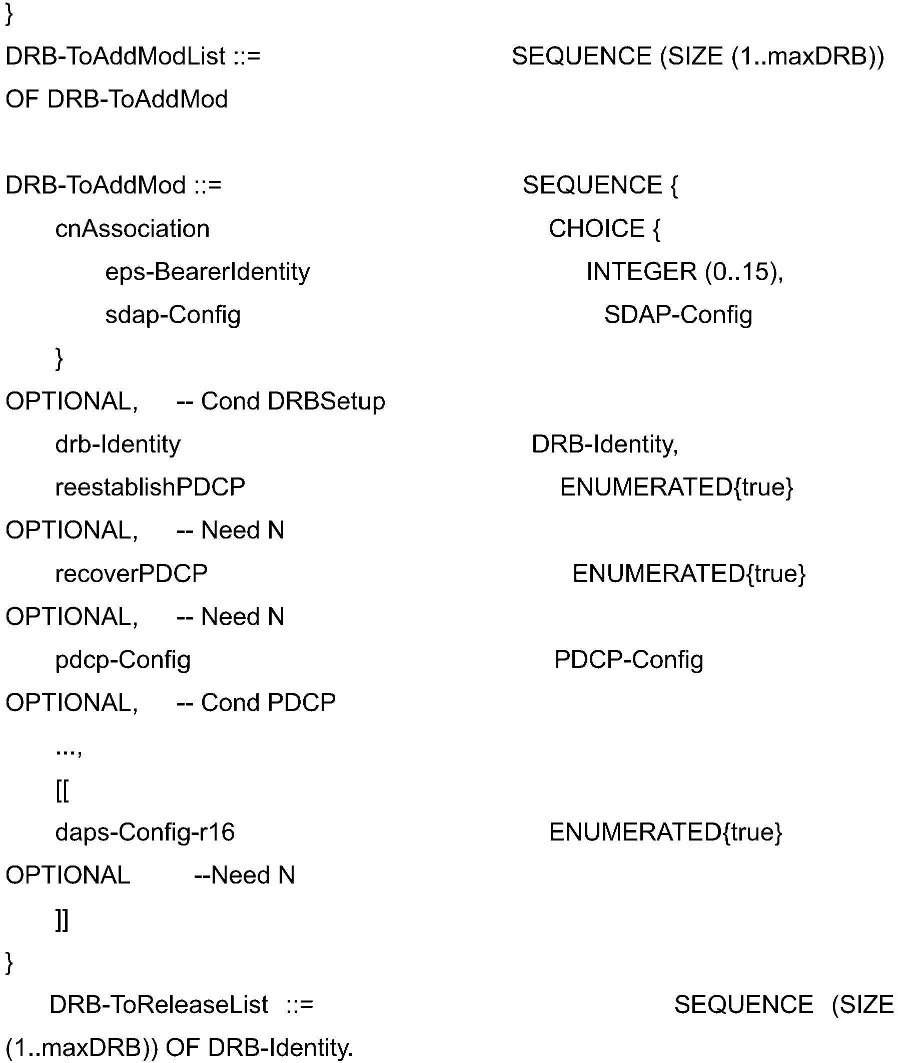

It can be seen from the above content that in the related art, the same DRB configuration is used for the bidirectional links of uplink and downlink, without distinguishing uplink and downlink. The technical solution of the embodiments of the present disclosure is to configure a DRB dedicated to a unidirectional link for each unidirectional link, for example, to configure a DRB dedicated to uplink for the uplink for uplink data transmission, and to configure a DRB dedicated to downlink for the downlink for downlink data transmission. Taking IE RadioBearerConfig as an example, in the embodiments of the present disclosure, dedicated establishment, modification and deletion messages are configured respectively for the DRB dedicated to uplink and the DRB dedicated to downlink in IE RadioBearerConfig. Illustratively, the relevant content is as follows:

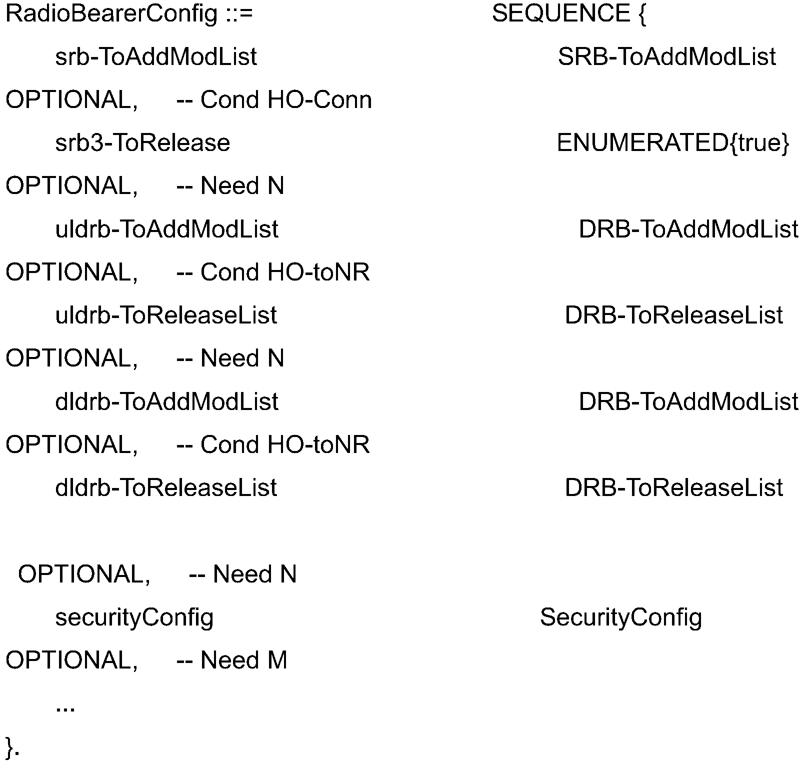

In some embodiments, only establishment, modification or release of the DRB dedicated to uplink is performed in the uplink DRB configuration information.

In some embodiments, only establishment, modification or release of the DRB dedicated to downlink is performed in the downlink DRB configuration information.

As an example, the control signaling IE for uplink DRB addition and modification is uldrb-ToAddModList. As an example, the control signaling IE for uplink DRB release is uldrb-ToReleaseList.

As an example, the control signaling IE for downlink DRB addition and modification is dldrb-ToAddModList. As an example, the control signaling IE for downlink DRB release is dldrb-ToReleaseList).

As another example, the relevant signaling for configuring, for example, a DRB dedicated to uplink and a DRB dedicated to downlink may also be: ULRadioBearerConfig, DLRadioBearerConfig. All uplink bearer information is configured in ULRadioBearerConfig, and all downlink bearer information is configured in DLRadioBearerConfig.

As another example, the relevant signaling for configuring, for example, a DRB dedicated to uplink and a DRB dedicated to downlink may also be: ULDataRadioBearerConfig, DLDataRadioBearerConfig. All uplink data bearer information is configured in ULDataRadioBearerConfig, and all downlink data bearer information is configured in DLDataRadioBearerConfig.

As a possible example, the control signaling IE of the uplink DRB configuration includes at least one of: an identifier of a DRB dedicated to uplink (e.g., uldrb-Identity), an identifier of a HARQ entity dedicated to uplink (e.g., UL HARQ entity ID), a physical resource set corresponding to uplink, SDAP configuration information of uplink (e.g., ulsdap-Config), PDCP configuration information of uplink (e.g., ulpdcp-Config), RLC configuration information of uplink, MAC configuration information of uplink, a cell identifier of uplink, a primary cell identifier of uplink, or a cell group identifier of uplink.

As a possible example, the control signaling IE of the downlink DRB configuration includes at least one of: an identifier of a DRB dedicated to downlink (e.g., dldrb-Identity), an identifier of a HARQ entity dedicated to downlink (e.g., DL HARQ entity ID), a physical resource set corresponding to downlink, SDAP configuration information of downlink (e.g., dlsdap-Config), PDCP configuration information of downlink (e.g., dlpdcp-Config), RLC configuration information of downlink, MAC configuration information of downlink, a cell identifier of downlink, a primary cell identifier of downlink, ora cell group identifier of downlink.

As an example, taking configuring a DRB dedicated to a transmission link and a DRB dedicated to a reception link as an example, configuring the DRB dedicated to the unidirectional link based on the unidirectional link DRB configuration information is illustrated by way of example. Illustratively, the relevant signaling content is as follows:

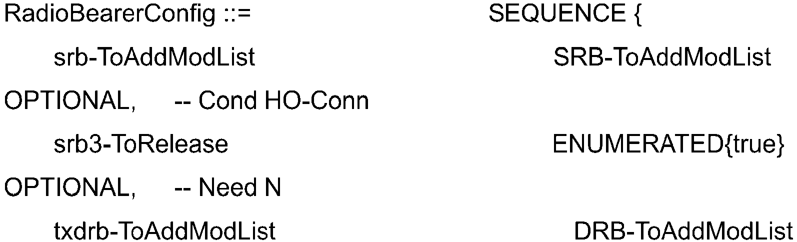

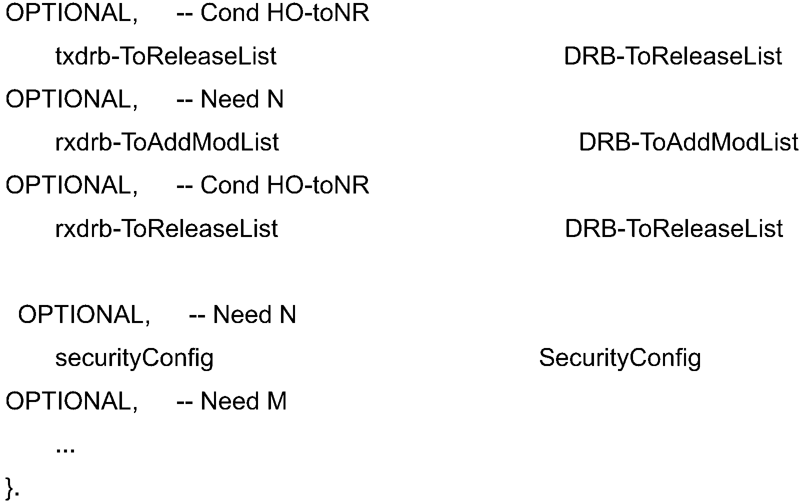

In the above content, txdrb is a DRB dedicated to a transmission link, and rxdrb is a DRB dedicated to a reception link.

As another example, the relevant signaling for configuring, for example, a DRB dedicated to a transmission link and a DRB dedicated to a reception link may also be: TXRadioBearerConfig, RXRadioBearerConfig. All transmission link bearer information is configured in TXRadioBearerConfig, and all reception link bearer information is configured in RXRadioBearerConfig.

As another example, the relevant signaling for configuring, for example, a DRB dedicated to a transmission link and a DRB dedicated to a reception link may also be: TXDataRadioBearerConfig, RXDataRadioBearerConfig. All transmission link data bearer information is configured in TXDataRadioBearerConfig, and all reception link data bearer information is configured in RXDataRadioBearerConfig.

As a possible example, the control signaling IE of the transmission link DRB configuration includes at least one of: an identifier of a DRB dedicated to the transmission link (e.g., txdrb-Identity), an identifier of a HARQ entity dedicated to the transmission link (e.g., TX HARQ entity ID), a physical resource set corresponding to the transmission link, SDAP configuration information of the transmission link (e.g., txsdap-Config), PDCP configuration information of the transmission link (e.g., txpdcp-Config), RLC configuration information of the transmission link, MAC configuration information of the transmission link, a cell identifier of the transmission link, a primary cell identifier of the transmission link, or a cell group identifier of the transmission link.

As a possible example, the control signaling IE of the reception link DRB configuration includes at least one of: an identifier of a DRB dedicated to the reception link (e.g., rxdrb-Identity), an identifier of a HARQ entity dedicated to the reception link (e.g., RX HARQ entity ID), a physical resource set corresponding to the reception link, SDAP configuration information of the reception link (e.g., rxsdap-Config), PDCP configuration information of the reception link (e.g., rxpdcp-Config), RLC configuration information of the reception link, MAC configuration information of the reception link, a cell identifier of the reception link, a primary cell identifier of the reception link, or a cell group identifier of the reception link.

In some embodiments, after the first network element configures the DRB dedicated to the unidirectional link based on the unidirectional link DRB configuration information, the first network element may perform data transmission based on the DRB dedicated to the unidirectional link, for example, perform uplink data transmission based on the DRB dedicated to uplink, and perform downlink data transmission based on the DRB dedicated to downlink, etc.

Based on the embodiment shown in FIG. 2, the first network element, based on the unidirectional link DRB configuration information from the second network element, configures a DRB dedicated to the unidirectional link, so as to perform data transmission based on the DRB dedicated to the unidirectional link. In this way, each unidirectional link is configured with its own corresponding dedicated DRB for data transmission, so that the DRB configuration of the uplink is decoupled from the DRB configuration of the downlink, or the DRB configuration of the transmission link is decoupled from the DRB configuration of the reception link, thereby reducing the complexity of data transmission.

In some embodiments, as shown in FIG. 11, the embodiments of the present disclosure further provide a data transmission method, which is applied to a second network element. The second network element may be the above base station 21 shown in FIG. 1. The method may include the following steps.

In S201: unidirectional link DRB configuration information is sent to the first network element.

In some embodiments, in order to reduce the complexity of data transmission, after the second network element configures the unidirectional link DRB configuration information, the second network element may send the unidirectional link DRB configuration information to the first network element. The unidirectional link DRB configuration information is used to configure a DRB dedicated to a unidirectional link.

For the description of the unidirectional link DRB configuration information, reference may be made to the relevant description in the embodiment shown in FIG. 2, and details are not repeated herein.

In some embodiments, sending the unidirectional link DRB configuration information to the first network element may be the second network element sending the unidirectional link DRB configuration information to the first network element through a first control message. That is, sending the unidirectional link DRB configuration information to the first network element may be the second network element sending a first control message to the first network element, where the first control message includes the unidirectional link DRB configuration information. The first control message includes at least one of: an RRC message, or a DRB configuration message.

In some embodiments, after the second network element configures the unidirectional link DRB configuration information, the second network element may configure the DRB dedicated to the unidirectional link based on the unidirectional link DRB configuration information. In this way, it is convenient that the configuration (cognition) of the second network element and the first network element regarding the DRB dedicated to the unidirectional link is consistent, thereby helping to reduce the complexity of data transmission and improve the data transmission effect. For the description of configuring the DRB dedicated to the unidirectional link based on the unidirectional link DRB configuration information, reference may be made to the relevant description in the above embodiments shown in FIG. 2, which is not repeated herein.

The above mainly introduces the solutions provided by the present disclosure from the perspective of interaction among various network elements. It can be understood that each network element, such as the first network element or the second network element, includes corresponding hardware structures and/or software modules for performing each function in order to implement the above functions. Those skilled in the art can easily realize that, combined with the algorithm steps of the examples described in the embodiments disclosed herein, the present disclosure can be implemented in the form of hardware or a combination of hardware and computer software. Whether a certain function is executed by hardware or in a manner of computer software driving hardware depends on the specific application and design constraint conditions of the technical solution. Professional technicians may use different methods to implement the described functions for each specific application, but such implementation should not be considered as exceeding the scope of the present disclosure.

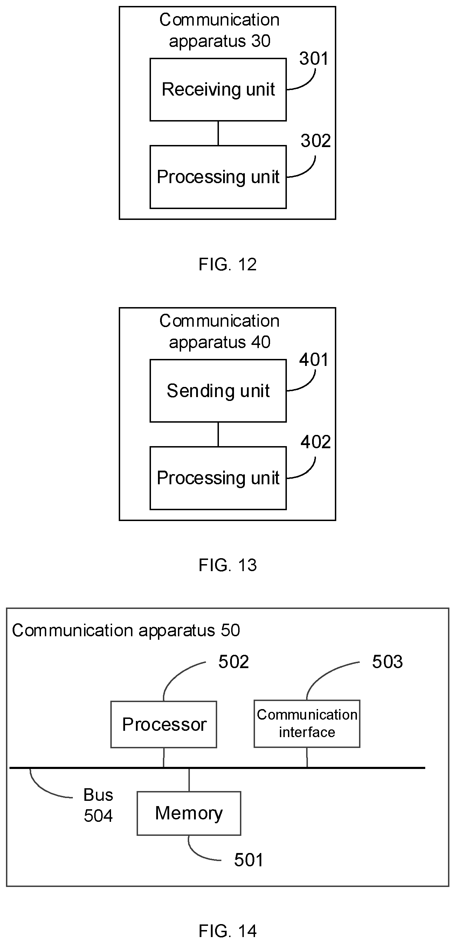

FIG. 12 is a composition schematic diagram of a communication apparatus provided by the embodiments of the present disclosure. As shown in FIG. 12, the communication apparatus 30 includes a receiving unit 301 and a processing unit 302.

The communication apparatus 30 may be the above-mentioned first network element or a chip in the first network element. When the communication apparatus 30 is used to implement the functions of the first network element in the above embodiments, each unit may be used to implement the following functions.

The receiving unit 301 is configured to receive unidirectional link data radio bearer (DRB) configuration information from a second network element, where the unidirectional link DRB configuration information is used to configure a DRB dedicated to a unidirectional link.

The processing unit 302 is configured to configure the DRB dedicated to the unidirectional link based on the unidirectional link DRB configuration information.

In some embodiments, the unidirectional link includes any one of: uplink, downlink, transmission link, or reception link.

In some embodiments, the DRB dedicated to the unidirectional link includes any one of: a DRB dedicated to uplink, a DRB dedicated to downlink, a DRB dedicated to transmission link, or a DRB dedicated to reception link.

In some embodiments, the unidirectional link DRB configuration information only includes information related to the unidirectional link.

In some embodiments, the DRB dedicated to the unidirectional link is associated with a hybrid automatic repeat request (HARQ) entity dedicated to the unidirectional link.

In some embodiments, the HARQ entity dedicated to the unidirectional link is associated with a physical resource set corresponding to the unidirectional link.

In some embodiments, the unidirectional link DRB configuration information includes at least one of: an identifier of the DRB dedicated to the unidirectional link, an identifier of the HARQ entity dedicated to the unidirectional link, the physical resource set corresponding to the unidirectional link, SDAP configuration information of the unidirectional link, PDCP configuration information of the unidirectional link, RLC configuration information of the unidirectional link, MAC configuration information of the unidirectional link, a cell identifier of the unidirectional link, a primary cell identifier of the unidirectional link, or a cell group identifier of the unidirectional link.

In some embodiments, the physical resource set includes at least one of: an identifier of a bandwidth part (BWP), a carrier identifier, or a cell identifier.

In some embodiments, the BWP is an active BWP.

In some embodiments, the processing unit 302 may be configured to perform at least one of: establishing the DRB dedicated to the unidirectional link; modifying the DRB dedicated to the unidirectional link; or releasing the DRB dedicated to the unidirectional link.

In some embodiments, the receiving unit 301 may be configured to receive the unidirectional link DRB configuration information from the second network element through a first control message, where the first control message includes at least one of: a radio resource control (RRC) message, or a DRB configuration message.

FIG. 13 is a composition schematic diagram of another communication apparatus provided by the embodiments of the present disclosure. As shown in FIG. 13, the communication apparatus 40 includes a sending unit 401. In some embodiments, the communication apparatus 40 further includes a processing unit 402.

The communication apparatus 40 may be the above-mentioned second network element or a chip in the second network element. When the communication apparatus 40 is used to implement the functions of the second network element in the above embodiments, each unit may be used to implement the following functions.

The sending unit 401 is configured to send unidirectional link DRB configuration information to a first network element, where the unidirectional link DRB configuration information is used to configure a DRB dedicated to a unidirectional link.

In some embodiments, the processing unit 402 is configured to configure the DRB dedicated to the unidirectional link based on the unidirectional link DRB configuration information.

In some embodiments, the unidirectional link includes any one of: uplink, downlink, transmission link, or reception link.

In some embodiments, the DRB dedicated to the unidirectional link includes any one of: a DRB dedicated to uplink, a DRB dedicated to downlink, a DRB dedicated to transmission link, or a DRB dedicated to reception link.

In some embodiments, the unidirectional link DRB configuration information only includes information related to the unidirectional link.

In some embodiments, the DRB dedicated to the unidirectional link is associated with a hybrid automatic repeat request (HARQ) entity dedicated to the unidirectional link.

In some embodiments, the HARQ entity dedicated to the unidirectional link is associated with a physical resource set corresponding to the unidirectional link.

In some embodiments, the unidirectional link DRB configuration information includes at least one of: an identifier of the DRB dedicated to the unidirectional link, an identifier of the HARQ entity dedicated to the unidirectional link, the physical resource set corresponding to the unidirectional link, SDAP configuration information of the unidirectional link, PDCP configuration information of the unidirectional link, RLC configuration information of the unidirectional link, MAC configuration information of the unidirectional link, a cell identifier of the unidirectional link, a primary cell identifier of the unidirectional link, or a cell group identifier of the unidirectional link.

In some embodiments, the physical resource set includes at least one of: an identifier of a bandwidth part (BWP), a carrier identifier, or a cell identifier.

In some embodiments, the BWP is an active BWP.

In some embodiments, the processing unit 402 may be configured to perform at least one of: establishing the DRB dedicated to the unidirectional link; modifying the DRB dedicated to the unidirectional link; or releasing the DRB dedicated to the unidirectional link.

In some embodiments, the sending unit 401 may be configured to send the unidirectional link DRB configuration information through a first control message, where the first control message includes at least one of: an RRC message, or a DRB configuration message.

It should be noted that the units in FIG. 12 and FIG. 13 may also be called modules, for example, the sending unit may be called a sending module. In addition, in the embodiments shown in FIG. 12 and FIG. 13, the names of the respective units may also not be the names shown in FIG. 12 and FIG. 13, for example, the sending unit may also be called a communication unit, and the receiving unit may also be called a communication unit.

If the respective units in FIG. 12 and FIG. 13 are implemented in the form of software function modules and sold or used as independent products, the respective units may be stored in a computer-readable storage medium. Based on such an understanding, the technical solution of the embodiments of the present disclosure essentially, or the part contributing to the prior art of the present disclosure, or all or part of the technical solution, may be embodied in the form of a software product. The computer software product is stored in a storage medium and includes several instructions for causing a computer device (which may be a personal computer, a server, or a network device, etc.) or a processor to execute all or part of the steps of the methods of the various embodiments of the present disclosure. The storage medium storing the computer software product includes: a USB flash drive, a removable hard disk, a read-only memory (ROM), a random access memory (RAM), a magnetic disk, an optical disk, and other media that can store program codes.

When the above communication apparatus 30 or communication apparatus 40 implements the functions of the above integrated modules in the form of hardware, the embodiments of the present disclosure provides a schematic structural diagram of a communication apparatus. As shown in FIG. 14, the communication apparatus 50 includes: a processor 502, a communication interface 503, and a bus 504. In some embodiments, the communication apparatus 50 may further include a memory 501.

The processor 502 may implement or execute various exemplary logic blocks, modules and circuits described in conjunction with the disclosure of the present disclosure. The processor 502 may be a central processing unit, a general-purpose processor, a digital signal processor, an application-specific integrated circuit, a field-programmable gate array or other programmable logic devices, a transistor logic device, a hardware component, or any combination thereof, which may implement or execute various exemplary logic blocks, modules and circuits described in conjunction with the disclosure of the present disclosure. The processor 502 may also be a combination implementing computing functions, for example, a combination including one or more microprocessors, a combination of a DSP and a microprocessor, etc.

The communication interface 503 is configured to connect to other devices through a communication network. The communication network may be Ethernet, a radio access network, a wireless local area network (WLAN), etc.

The memory 501 may be a read-only memory (ROM) or other types of static storage devices capable of storing static information and instructions, a random access memory (RAM) or other types of dynamic storage devices capable of storing information and instructions, or may be an electrically erasable programmable read-only memory (EEPROM), a disk storage medium or other magnetic storage devices, or any other medium capable of carrying or storing desired program codes in the form of instructions or data structures and capable of being accessed by a computer, but is not limited thereto.

As a possible implementation, the memory 501 may exist independently of the processor 502, and the memory 501 may be connected to the processor 502 through the bus 504, for storing instructions or program codes. When the processor 502 calls and executes the instructions or program codes stored in the memory 501, the data transmission method provided by the embodiments of the present disclosure can be implemented.

In another possible implementation, the memory 501 may also be integrated with the processor 502.

The bus 504 may be an extended industry standard architecture (EISA) bus, etc. The bus 504 may be categorized into an address bus, a data bus, a control bus, etc. For ease of illustration, FIG. 14 only uses one thick line to indicate, but does not indicate that there is only one bus or one type of bus.

Through the description of the above implementations, those skilled in the art can clearly understand that, for the convenience and brevity of description, only the division of the above functional modules is taken as an example for illustration. In practical applications, the above functions can be allocated to different functional modules according to needs, that is, the internal structure of the base station or terminal is divided into different functional modules to complete all or part of the functions described above.

The embodiments of the present disclosure further provide a computer-readable storage medium (e.g., a non-transitory computer-readable storage medium). All or part of the processes in the above method embodiments may be completed by computer instructions instructing relevant hardware, and the program may be stored in the above computer-readable storage medium. When executed, the program may include the processes of the above method embodiments. The computer-readable storage medium may be an internal storage unit or an internal memory of any of the preceding embodiments. The above computer-readable storage medium may also be an external storage device of the above first network element or second network element, for example, a plug-in hard disk, a smart media card (SMC), a secure digital (SD) card, a flash card, etc., equipped on the above first network element or second network element. Further, the above computer-readable storage medium may also include both the internal storage unit of the above first network element or second network element and the external storage device. The above computer-readable storage medium is configured to store the above computer program and other programs and data required by the above first network element or second network element. The above computer-readable storage medium may also be configured to temporarily store data that has been output or will be output.

The embodiments of the present disclosure further provide a computer program product, where the computer program product includes a computer program, and when the computer program product is run on a computer, the computer is enabled to execute any one of the data transmission methods provided in the above embodiments.

Although the present disclosure has been described herein in conjunction with various embodiments, in the process of implementing the claimed disclosure, those skilled in the art, by viewing the drawings, the disclosure, and the appended claims, may understand and implement other variations of the disclosed embodiments. In the claims, the word "include/comprise" and variations thereof does not exclude other components or steps, and "a" or "an" does not exclude a plurality. A single processor or other units may implement several functions recited in the claims. The mere fact that certain measures are recited in mutually different dependent claims does not indicate that these measures cannot be combined to produce a beneficial effect.

Although the present disclosure has been described in conjunction with exemplary features and embodiments thereof, it is obvious that various modifications and combinations can be made thereto without departing from the spirit and scope of the present disclosure. Accordingly, the present specification and drawings are merely exemplary illustrations of the present disclosure defined by the appended claims, and are considered to cover any and all modifications, variations, combinations, or equivalents within the scope of the present disclosure. Obviously, those skilled in the art can make various modifications and variations to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations.

The above are only specific implementations of the present disclosure, but the protection scope of the present disclosure is not limited thereto. Any change or replacement within the technical scope disclosed in the present disclosure should be covered within the protection scope of the present disclosure. Therefore, the protection scope of the present disclosure should be based on the protection scope of the claims.

## Claims

1. A data transmission method, applied to a first network element, **characterized in that** the method comprises:
receiving unidirectional link data radio bearer (DRB) configuration information from a second network element, wherein the unidirectional link DRB configuration information is used to configure a DRB dedicated to a unidirectional link; and
configuring the DRB dedicated to the unidirectional link based on the unidirectional link DRB configuration information.

2. The method according to claim 1, wherein the unidirectional link comprises any one of: uplink, downlink, transmission link, or reception link.

3. The method according to claim 1 or 2, wherein the DRB dedicated to the unidirectional link comprises any one of: a DRB dedicated to uplink, a DRB dedicated to downlink, a DRB dedicated to transmission link, or a DRB dedicated to reception link.

4. The method according to claim 1, wherein the unidirectional link DRB configuration information only comprises information related to the unidirectional link.

5. The method according to claim 1, wherein the DRB dedicated to the unidirectional link is associated with a hybrid automatic repeat request (HARQ) entity dedicated to the unidirectional link.

6. The method according to claim 5, wherein the HARQ entity dedicated to the unidirectional link is associated with a physical resource set corresponding to the unidirectional link.

7. The method according to claim 1, wherein the unidirectional link DRB configuration information comprises at least one of: an identifier of the DRB dedicated to the unidirectional link, an identifier of an HARQ entity dedicated to the unidirectional link, a physical resource set corresponding to the unidirectional link, service data adaptation protocol (SDAP) configuration information of the unidirectional link, packet data convergence protocol (PDCP) configuration information of the unidirectional link, radio link control (RLC) configuration information of the unidirectional link, medium access control (MAC) configuration information of the unidirectional link, a cell identifier of the unidirectional link, a primary cell identifier of the unidirectional link, or a cell group identifier of the unidirectional link.

8. The method according to claim 6 or 7, wherein the physical resource set comprises at least one of: an identifier of bandwidth part (BWP) , a carrier identifier, or a cell identifier.

9. The method according to claim 8, wherein the BWP is an active BWP.

10. The method according to claim 1, wherein the configuring the DRB dedicated to the unidirectional link comprises at least one of:
establishing the DRB dedicated to the unidirectional link;
modifying the DRB dedicated to the unidirectional link; or
releasing the DRB dedicated to the unidirectional link.

11. The method according to claim 1, wherein the receiving the unidirectional link data radio bearer (DRB) configuration information from the second network element comprises:
receiving the unidirectional link DRB configuration information from the second network element through a first control message, wherein the first control message comprises at least one of: a radio resource control (RRC) message, or a DRB configuration message.

12. A data transmission method, applied to a second network element, **characterized in that** the method comprises:
sending unidirectional link data radio bearer (DRB) configuration information to a first network element, wherein the unidirectional link DRB configuration information is used to configure a DRB dedicated to a unidirectional link.

13. The method according to claim 12, further comprising:
configuring the DRB dedicated to the unidirectional link based on the unidirectional link DRB configuration information.

14. The method according to claim 12 or 13, wherein the unidirectional link comprises any one of: uplink, downlink, transmission link, or reception link.

15. The method according to claim 12 or 13, wherein the DRB dedicated to the unidirectional link comprises any one of: a DRB dedicated to uplink, a DRB dedicated to downlink, a DRB dedicated to transmission link, or a DRB dedicated to reception link.

16. The method according to claim 12, wherein the unidirectional link DRB configuration information only comprises information related to the unidirectional link.

17. The method according to claim 12, wherein the DRB dedicated to the unidirectional link is associated with a hybrid automatic repeat request (HARQ) entity dedicated to the unidirectional link.

18. The method according to claim 17, wherein the HARQ entity dedicated to the unidirectional link is associated with a physical resource set corresponding to the unidirectional link.

19. The method according to claim 12, wherein the unidirectional link DRB configuration information comprises at least one of: an identifier of the DRB dedicated to the unidirectional link, an identifier of the HARQ entity dedicated to the unidirectional link, the physical resource set corresponding to the unidirectional link, service data adaptation protocol (SDAP) configuration information of the unidirectional link, packet data convergence protocol (PDCP) configuration information of the unidirectional link, radio link control (RLC) configuration information of the unidirectional link, medium access control (MAC) configuration information of the unidirectional link, a cell identifier of the unidirectional link, a primary cell identifier of the unidirectional link, or a cell group identifier of the unidirectional link.

20. The method according to claim 18 or 19, wherein the physical resource set comprises at least one of: an identifier of bandwidth part (BWP), a carrier identifier, or a cell identifier.

21. The method according to claim 20, wherein the BWP is an active BWP.

22. The method according to claim 13, wherein the configuring the DRB dedicated to the unidirectional link comprises at least one of:
establishing the DRB dedicated to the unidirectional link;
modifying the DRB dedicated to the unidirectional link; or
releasing the DRB dedicated to the unidirectional link.

23. The method according to claim 12, wherein the sending the unidirectional link DRB configuration information to the first network element comprises:
sending the unidirectional link DRB configuration information to the first network element through a first control message, wherein the first control message comprises at least one of: a radio resource control (RRC) message, or a DRB configuration message.

24. A communication apparatus, **characterized by** comprising: a memory and a processor, wherein the memory and the processor is coupled; the memory is configured to store instructions executable by the processor; the processor, upon executing the instructions, performs the method according to any one of claims 1 to 11, or the method according to any one of claims 12 to 23.

25. A computer-readable storage medium, **characterized by** the computer-readable storage medium stores computer instructions, and upon the computer instructions being run on a computer, the computer is enabled to execute the method according to any one of claims 1 to 11, or the method according to any one of claims 12 to 23.
